(19) **Europäisches Patentamt**
**European Patent Office**
**Office européen des brevets**

(11) Numéro de publication : **0 234 654 B1**

(12) **FASCICULE DE BREVET EUROPEEN**

(45) Date de publication du fascicule du brevet :
**05.06.91 Bulletin 91/23**

(51) Int. Cl.$^5$ : **G06K 7/06**

(21) Numéro de dépôt : **87200260.5**

(22) Date de dépôt : **18.02.87**

(54) **Appareil pour établir des transferts de données avec une carte électronique portative.**

(30) Priorité : **21.02.86 FR 8602401**

(43) Date de publication de la demande :
**02.09.87 Bulletin 87/36**

(45) Mention de la délivrance du brevet :
**05.06.91 Bulletin 91/23**

(84) Etats contractants désignés :
**CH DE FR GB IT LI SE**

(56) Documents cités :
**DE-A- 3 235 654**
**FR-A- 2 445 560**
**FR-A- 2 554 977**

(73) Titulaire : **PHILIPS ELECTRONIQUE GRAND PUBLIC**
**51, Rue Carnot**
**F-92150 Suresnes (FR)**
**FR**
Titulaire : **N.V. Philips' Gloeilampenfabrieken**
**Groenewoudseweg 1**
**NL-5621 BA Eindhoven (NL)**
**CH DE GB IT LI SE**

(72) Inventeur : **Chalendard, Hervé**
**Société Civile SPID 156, Boulevard Haussmann**
**F-75007 Paris (FR)**

(74) Mandataire : **Caron, Jean et al**
**Société Civile S.P.I.D. 156, Boulevard Haussmann**
**F-75008 Paris (FR)**

## Description

L'invention concerne un appareil destiné à recevoir une carte électronique portative étant munie d'au moins un circuit intégré comportant une mémoire et relié à des éléments de connexion en surface de la carte, avec lesquels un transfert de données peut être établi, cet appareil comprenant un boîtier avec une ouverture pour l'introduction de la carte, ledit boîtier étant muni d'une pièce mobile qui est entraînée par la carte et qui sert d'intermédiaire pour établir une connexion électrique entre la carte et un circuit extérieur à la carte durant le transfert de données.

Un appareil tel que défini ci-dessus est décrit par les brevets FR-A-2 445 560 et DE-A-3 235 654. Selon ces brevets l'appareil comporte une pièce mobile déplacée par l'introduction de la carte et portant des contacts qui viennent s'appliquer sur la carte sous l'effet du déplacement de la pièce mobile.

Dans ce type d'appareil les contacts liés à la pièce mobile sont mobiles eux-mêmes, et une difficulté se présente pour relier ces contacts mobiles avec un circuit électronique extérieur fixé au boîtier. La liaison peut être faite par des fils souples comme cela est indiqué dans FR-A-2 445 560 (Ref 40 ≠ fig. 2B). Au stade de la fabrication ces dispositifs nécessitent la préparation de nombreux fils et la connexion des deux extrémités de chaque fil, par exemple par soudure ou au moyen d'un connecteur. Ces nombreuses connexions sont coûteuses et elles sont en outre des sources de défauts possibles.

L'invention fournit un moyen de liaison entre les surfaces de contact mobiles liées à la pièce mobile et le circuit fixe, moyen dont le prix de revient est très faible et qui n'introduit aucune liaison intermédiaire, source de faux contacts. A cet effet l'appareil selon l'invention est notamment remarquable en ce que la pièce mobile est munie de ressorts de poussée qui sont placés au droit d'éléments de contact imprimés sur une feuille isolante flexible pour les appliquer contre les éléments de connexion de la carte durant le transfert de données, et en ce qu'une extrémité de cette même feuille, portant lesdits éléments de contact ainsi que des connexions imprimées, est attachée à la pièce mobile et se déplace par rapport au boîtier en simultanéïté avec cette pièce, alors que l'autre extrémité est attachée au boîtier.

Certes, le document FR-A-2 554 977 enseigne l'utilisation d'une feuille en matériau souple. Néanmoins dans ce document, la souplesse de la feuille est mise à profit seulement pour réaliser les contacts avec la carte, au moyen d'un bloc de mousse qui appuie dessus. La feuille est pratiquement fixe et est attachée au boîtier à ses deux extrémités : elle ne résoud pas le problème posé par la liaison entre un chariot mobile et une partie fixe.

Avantageusement la partie de la feuille isolante flexible imprimée qui est fixée au boîtier porte des composants essentiels dudit circuit extérieur à la carte. Ceci permet d'éviter toute connexion intermédiaire supplémentaire, source de défauts et d'accroissement des coûts.

Les appareils du type envisagé ici comportent souvent un clavier de commande, et les avantages de l'invention sont alors exploités au mieux, si c'est une partie même de la susdite feuille isolante flexible qui constitue une des feuilles du clavier, ce dernier étant du type à feuilles métallisées entre lesquelles est placée une feuille intercalaire percée. Des claviers de ce type sont décrits en soi dans de nombreux brevets, parmi lesquels on peut citer FR-A-2 400 820, EP-A-0 157 035, EP-A-0 150 600.

Pour simplifier la construction de l'appareil, il est avantageux que la pièce mobile et le ressort de poussée soient formés d'une seule pièce. Ainsi, la pièce mobile étant par exemple moulée en matière plastique, elle sort de moulage avec les ressorts ce qui économise une opération de montage de ressorts. Pour assurer un positionnement précis des éléments de contact de la feuille flexible, des moyens de fixation de celle-ci sont avantageusement portés par les ressorts de poussée eux mêmes, plutôt que par des parties rigides de la pièce mobile. En outre cette disposition a pour avantage d'entraîner un léger glissement de la feuille par rapport à la carte avec un effet autonettoyant.

Afin d'améliorer la qualité électrique des contacts et la résistance à l'usure des éléments de contact, chacun de ces derniers est avantageusement muni d'une bille à surface conductrice.

La description qui va suivre, en regard des dessins annexés décrivant des exemples non limitatifs fera bien comprendre comment l'invention peut être réalisée.

Les figures 1 et 2 représentent schématiquement en coupe un appareil selon l'invention, avec la carte et la pièce mobile respectivement en position de repos et en position de transfert de données.

La figure 3 représente en coupe une vue latérale d'une forme de réalisation d'une partie de boîtier.

La figure 4 représente une vue en plan de la même partie.

Les figures 5 à 7 représentent la pièce mobile vue latéralement selon plusieurs plans de coupe.

La figure 8 représente la pièce mobile vue en plan.

La figure 9 représente la partie de la feuille flexible qui est liée à la pièce mobile.

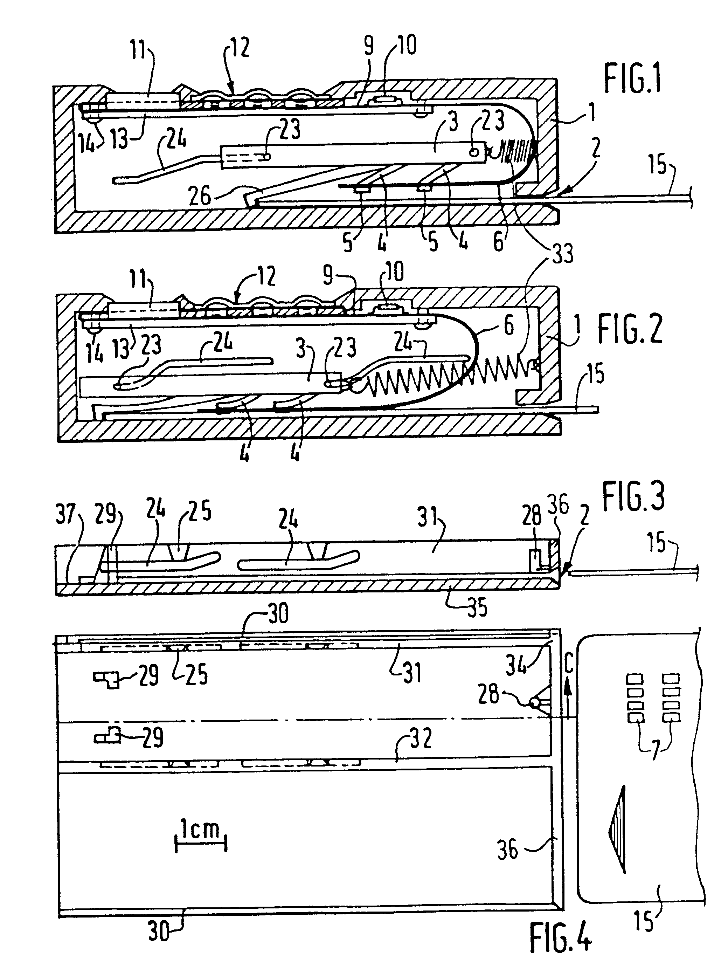

La figure 1 représente un appareil selon l'invention, destiné à recevoir une carte électronique portative, notamment une carte d'identification, une carte de paiement, ou une carte de crédit. Cet appareil comprend un boîtier 1 avec une ouverture 2 pour l'introduction de la carte 15. Le boîtier 1 est muni d'une pièce mobile 3 ou chariot qui est entrainé par la carte 15 au moyen d'un crochet 26 élastique solidaire du chariot et qui est accroché par l'extrémité avant, à gauche sur la figure, de la carte 15, lorsque l'on pousse cette dernière vers l'intérieur du boîtier.

Le boîtier comporte en outre un circuit électronique 9 à 11 extérieur à la carte, qui est fixé au boîtier 1.

Le chariot 3 qui sert d'intermédiaire pour établir une connexion électrique entre la carte et le circuit électronique extérieur à la carte est à cet effet muni de ressorts de poussée 4 qui sont placés au droit d'éléments de contact 5 imprimés sur une feuille isolante flexible 6.

Le chariot 3 est guidé de manière qu'il reste parallèle à lui-même et s'approche de la carte alors que le chrariot et la carte sont poussés simultanément vers le fond du boîtier, à gauche sur la figure. Ces moyens de guidage sont constitués par exemple par des ergots 23 portés par le chariot et des glissières 24 portées par le boîtier, coopérant ensemble pour assurer le mouvement de-translation du chariot par rapport au boîtier. En outre un ressort 33 est prévu pour rappeler le chariot en position de repos. La figure 2 montre le même appareil avec le chariot en position de travail, la carte 15 étant complètement enfoncée dans l'appareil, le chariot est abaissé et les ressorts de poussée 4 sont fléchis et appuient le film 6 contre la carte 15. Cette carte dont une partie est visible en plan à droite de la figure 4 est munie d'au moins un circuit intégré (non représenté) comportant une mémoire avec laquelle un transfert de données peut être établi au moyen d'éléments de connexion par contact 7 disposés en surface de la carte, lorsque celle-ci est introduite dans le boîtier. Les ressorts 4 appuient donc les éléments de contact 5 de la feuille 6 contre les éléments de contact 7 de la carte 15, ce qui permet la connexion électrique nécessaire pour effectuer un transfert de données entre le circuit intégré de la carte et le circuit extérieur fixé au boîtier.

Une partie de la feuille 6, qui porte les éléments de contact 5, est attachée au chariot 3 et se déplace par rapport au boîtier en simultanéité avec le chariot, cependant qu'une autre partie 9 de la feuille est attachée au boîtier.

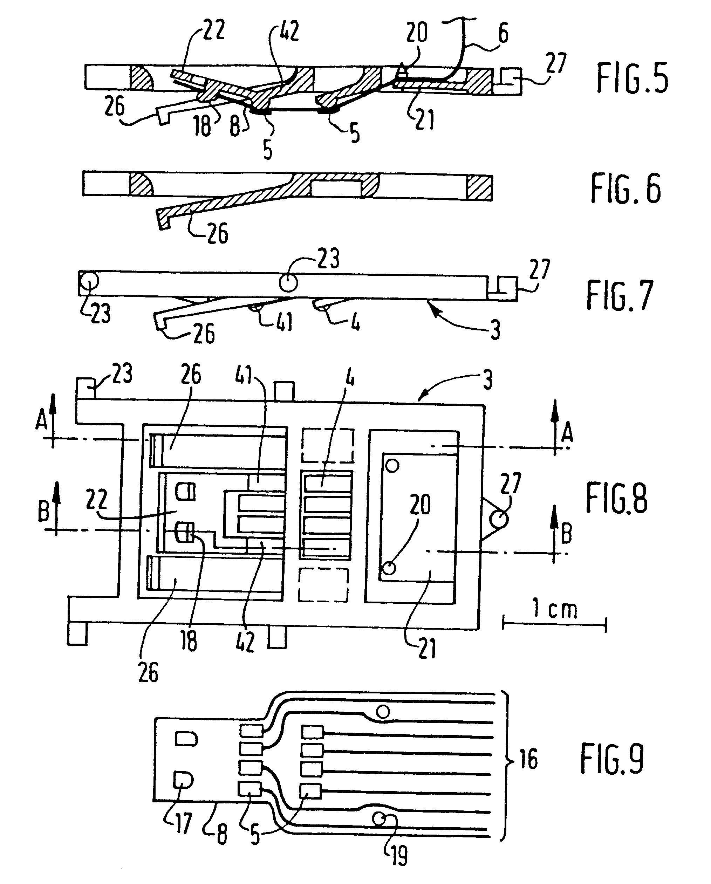

Cette feuille porte des connexions imprimées qui seront décrites à propos de la figure 9, pour relier les éléments de contact 5 aux circuits électroniques 9 à 11. En outre la partie 9 fixée au boîtier constitue directement un substrat qui porte des composants essentiels dudit circuit extérieur à la carte. Ces composants sont par exemple des circuits intégrés en boîtier miniature, des résistances, condensateurs et autres schématisés par 10, un afficheur à cristaux liquides 11 et un clavier 12. Ce dernier d'un type bien connu est constitué, du haut vers le bas et dans l'ordre, par: une feuille cloquée à effet tactile de déclic, une feuille isolante flexible porteuse de contacts, une feuille intercalaire percée au droit des contacts de la feuille supérieure, et une deuxième feuille isolante flexible portant des contacts en face de ceux de la feuille supérieure. La feuille inférieure est constituée par une partie fixe 9 de la même feuille 6 qui porte les contacts de connexion avec la carte, et la feuille supérieure est elle aussi constituée par une autre partie repliée de la même feuille 6, 9. Une plaque rigide 13 est placée sous l'ensemble, fixée au boîtier par un moyen quelconque 14, afin de soutenir le clavier 12 et le circuit 9.

Les éléments mécaniques représentés par la figure 3 et 4 représentent en détail une forme de réalisation de la partie du boîtier servant à guider la carte et le chariot. Il est constitué d'une plaque de fond 35, de parois latérales 30, et d'une paroi de façade 36 dans laquelle est ménagée la trémie d'entrée 2 de la carte 15. Il porte en outre deux poutres 31 et 32 accrochées à la façade en 34 et à la plaque de base en 37 et dans lesquelles sont creusées les glissières 24. Des parties inclinées 25 sont prévues pour permettre l'introduction facile du chariot entre les glissières, par flexion élastique des poutres 31, 32. La partie de carte indiquée à droite donne l'échelle du dessin. Il est inutile que le chariot ait une largeur du même ordre que celle de la carte et il suffit qu'il recouvre la partie de la carte portant les contacts 7. C'est pourquoi les deux poutres 31, 32 sont disposées de part et d'autre de la position qu'occupent ces contacts lorsque la carte est introduite dans le dispositif. Les piliers 29 servent à maintenir un dispositif non représenté et qui ne fait pas partie de l'invention, destiné à assurer la butée du chariot et éventuellement à détecter l'arrivée en butée de ce dernier.

Les figures 5 à 8 représentent plusieurs vues du chariot 3. L'échelle est indiquée à la figure 8, elle est plus grande que celle de la figure 4 où le chariot de la figure 8 doit être introduit entre les poutres 31 et 32. Ce chariot est muni d'un premier groupe de quatre ressorts de poussée dont l'un est désigné par la référence 4, de deux ressorts de poussée 41 et 42 entre lesquels sont encore placés deux ressorts de poussée identiques à ceux du premier groupe. Les deux ressorts 41 et 42 sont prolongés par une pièce 22 qui les relie et qui porte des crochets 18 destinés à fixer la feuille flexible 6, de la manière montrée par la figure 5. En fixant le film de cette manière, lorsque les ressorts de poussée sont pressés, les crochets 18 entraînent le film et provoquent un glissement du film sur la carte qui assure un autonettoyage des contacts. Le film passe au travers du chariot pour remonter vers le circuit fixé au boîtier et il est fixé au chariot en un autre point grâce à des pointes 20 fixées à une plaque souple 21, qui assure la tension de la feuille entre les crochets 18 et les pointes 20.

On retrouve sur les figures 7 et 8 les ergots 23 et les crochets 26 déjà mentionnés. Les crochets 26 sont au nombre de deux afin d'assurer un entrainement symétrique du chariot.

Les ressorts de poussée sont munis de portées en forme de demi-sphère ou de demi-cylindre afin de concentrer l'effort de poussée sur la feuille. Tous les éléments du chariot, en particulier les crochets 26, les ressorts, les ergots 23, et la pièce 21 sont moulés ensemble par exemple en polycarbonate.

Un téton 27 permet l'accrochage d'un ressort de rappel dont l'autre extrémité est accrochée à un téton semblable 28 visible sur la figure 4.

La forme de réalisation de la partie de la feuille flexible liée au chariot, représentée figure 9, comprend les éléments de contact imprimés 5 déjà mentionnés dans la disposition correspond à celle de l'extrémité des ressorts de poussée 4 du chariot 3 et bien évidemment aussi à celle des éléments de contact de la carte. Il porte des pistes métallisées 16 reliées à chacun des éléments de contact 5, et il est percé de trous 17 assurant l'accrochage avec les crochets 18 du chariot et de trous 19 assurant l'accrochage avec les pointes 20 du chariot. Il est réalisé par exemple en polyimide d'épaisseur 150 micro-mètres.

Les éléments de contact 5 représentés à la figure 9 sont des plages de circuit imprimé de même nature que les pistes conductrices 16. On a constaté qu'il est avantageux de munir ces plages de billes, par exemple en métal doré, d'un diamètre d'environ 1mm. Pour cela, les plages 5 étant recouvertes, par exemple par sérigraphie, de pâte à souder crue, il suffit de positionner une bille au centre de chaque plage, puis de réaliser une refusion de la pâte à souder. Avant la refusion les billes sont maintenues par la viscosité de la pâte, puis elles sont centrées par capillarité au moment de la refusion, la soudure formant alors un ménisque quine recouvre pas la bille.

L'appareil décrit ici nécessite une introduction manuelle et le maintien de la carte en position pendant le transfert des données. Un dispositif quelconque peut être prévu pour valider ce transfert lorsque la carte est dans la position correcte et seulement alors. Bien entendu l'invention est applicable à toutes réalisations de lecteurs y compris ceux comportant un moteur et des galets d'entrainement pour introduire la carte.

## Revendications

1. Appareil destiné à recevoir une carte électronique portative, étant munie d'au moins un circuit intégré comportant une mémoire et relié à des éléments de connexion (7) en surface de la carte, avec lesquels un transfert de données peut être établi, cet appareil comprenant un boîtier (1) avec une ouverture pour l'introduction de la carte (15), ledit boîtier étant muni d'une pièce mobile (3) qui est entrainée par la carte (15) et qui sert d'intermédiaire pour établir une connexion électrique entre la carte et un circuit extérieur à la carte durant le transfert de données, caractérisé en ce que la pièce mobile est munie de ressorts de poussée (4) qui sont placés au droit d'éléments de contact (5) imprimés sur une feuille isolante flexible (6) pour les appliquer contre les éléments de connexion (7) de la carte durant le transfert de données, et en ce qu'une extrémité de cette même feuille, portant lesdits éléments de contact (5) ainsi que des connexions imprimées, est attachée à la pièce mobile (3) et se déplace par rapport au boîtier en simultanéïté avec cette pièce, alors que l'autre extrémité est attachée au boîtier.

2. Appareil selon la revendication 1, caractérisé en ce que la partie fixe (9) de la feuille isolante flexible imprimée porte des composants essentiels (10-12) dudit circuit extérieur à la carte.

3. Appareil selon la revendication 2, caractérisé en ce qu'une portion de la partie fixe (9) de la feuille isolante constitue au moins une des feuilles d'un clavier (12) de commande de l'appareil, clavier du type à feuilles métallisées flexibles avec intercalaire.

4. Appareil selon l'une quelconque des revendications précédentes, caractérisé en ce que les ressorts de poussée (4, 41, 42) et la pièce mobile (3) sont formés d'une seule pièce.

5. Appareil selon la revendication 4, caractérisé en ce que la pièce mobile et les ressorts sont en matière plastique moulée.

6. Appareil selon l'une quelconque des revendications précédentes caractérisé en ce qu'au moins un des ressorts de poussée (41, 42) est muni de moyens de fixation (18) de l'extrémité de la feuille isolante flexible.

7. Appareil selon l'une quelconque des revendications précédentes, caractérisé en ce que chacun desdits éléments de contact (5) est muni d'une bille à surface électriquement conductrice.

8. Appareil selon l'une quelconque des revendications précédentes caracterisé en ce que la pièce mobile (3) et le boîtier (1) sont munis l'un d'ergots (23) et l'autre de glissières inclinées (24) coopérant ensemble pour assurer un mouvement de translation de la pièce mobile par rapport au boîtier, et en ce que la pièce mobile est munie d'un crochet élastique (26) afin d'assurer son entrainement par la carte.

9. Appareil selon la revendication 8, caractérisé en ce que le crochet élastique (26) et la pièce mobile (3) sont formés d'une seule pièce.

## Ansprüche

1. Apparat zum Einnehmen einer tragbaren elektronischen Karte, auf der wenigstens eine integrierte Schaltung angebracht ist, die einen Speicher enthält und auf der Kartenoberfläche an Verbindungselemente (7) angeschlossen ist, mit denen eine Datenübertragung durchführbar ist, welcher Apparat eine Dose (1) enthält mit einer Öffnung zum Einführen der Karte (15), wobei diese Dose mit einem beweglichen Element (3) versehen ist, das die Karte (15) mitnimmt und als Mittel zum Herstellen einer elektrischen Verbindung zwischen der Karte und einer außerhalb der Karte befindlichen Schaltung bei der Datenübertragung dient, dadurch gekennzeichnet, daß das bewegliche Element mit Druckfedern (4) versehen ist, die bei den Kontaktelementen (5) angeordnet sind, die auf eine flexible Isolierfolie (6) aufgedruckt sind, um ihren Kontakt mit den Verbindungselementen (7) auf der Karte bei der Datenübertragung zu versorgen, und daß ein Ende dieser Folie mit den Kontaktelementen (5) sowie mit den aufgedruckten Verbindungen am beweglichen Element (3) befestigt ist und sich in bezug auf die Dose gleichzeitig mit diesem beweglichen Element verlagert, wobei das andere Ende an der Dose befestigt ist.

2. Apparat nach Anspruch 1, dadurch gekennzeichnet, daß das festgesetzte Element (9) der aufgedruckten flexiblen Isolierfolie wesentliche Bauteile (10-12) der außerhalb der Karte liegenden Schaltung trägt.

3. Apparat nach Anspruch 2, dadurch gekennzeichnet, daß ein Teil des festgesetzten Elements (9) der Isolierfolie wenigstens eine der Folien einer Apparatsteuertastatur (12) darstellt, wobei diese Tastatur vom Typ mit flexiblen metallisierten Folien mit Zwischenlage ist.

4. Apparat nach einem oder mehreren der vorangehenden Ansprüche, dadurch gekennzeichnet, daß die Druckfedern (4, 41, 42) und das bewegliche Element (3) aus einem Stück gebildet sind.

5. Apparat nach Anspruch 4, dadurch gekennzeichnet, daß das bewegliche Element und die Federn aus gegossenem Kunststoff bestehen.

6. Apparat nach einem oder mehreren der vorangehenden Ansprüche, dadurch gekennzeichnet, daß wenigstens eine der Druckfedern (41, 42) mit den Befestigungsmitteln (18) des Endes der flexiblen Isolierfolie versehen ist.

7. Apparat nach einem oder mehreren der vorangehenden Ansprüche, dadurch gekennzeichnet, daß jedes der Kontaktelemente (5) mit einer Kugel mit elektrisch leitender Oberfläche versehen ist

8. Apparat nach einem oder mehreren der vorangehenden Ansprüche, dadurch gekennzeichnet, daß das bewegliche Element (3) und die Dose (1) einerseits mit Vorsprüngen (23) und andererseits mit geneigten Schlitten (24) versehen sind, die zur Gewährleistung einer translierenden Bewegung des beweglichen Elements in bezug auf die Dose zusammenarbeiten, und daß das bewegliche Element mit einem elastischen Haken (26) versehen ist, um das Mitnehmen durch die Karte zu gewährleisten.

9. Apparat nach Anspruch 8, dadurch gekennzeichnet, daß der elastische Haken (26) und das bewegliche Element (3) aus einem Stück gebildet sind.

## Claims

1. An apparatus designed to receive a portable electronic card, which card is provided with at least one integrated circuit comprising a memory and connected to connecting elements (7) at the surface of the card by which a transfer of data may be achieved, which apparatus comprises a housing (1) provided with an opening for introducing the card (15), the said housing being provided with a movable part (3) which is taken along by the card (15) and which serves as an intermediary for establishing an electrical connection between the card and a circuit outside the card during the transfer of data, characterized in that the movable part is provided with compression springs (4) which are positioned perpendicularly to contact elements (5) printed on a flexible insulating foil (6) so as to press them against the connecting elements (7) of the card during the transfer of data, and in that one end of this same foil carrying the said contact elements (5) and printed connections is fixed to the movable part (3) and is displaceable with respect to the housing simultaneously with this movable part, while the other end of the foil is fixed to the housing.

2. An apparatus as claimed in Claim 1, characterized in that the fixed part (9) of the flexible insulating printed foil carries essential components (10-12) of the said circuit outside the card.

3. An apparatus as claimed in Claim 2, characterized in that a portion of the fixed part (9) of the insulating foil constitutes at least one of the foils of a control keyboard (12) of the apparatus, which keyboard is of the type having metallized flexible foils with an interposed foil.

4. An apparatus as claimed in any one of the preceding Claims, characterized in that the compression springs (4, 41, 42) and the movable part (3) are formed from one piece.

5. An apparatus as claimed in Claim 4, characterized in that the movable part and the springs are made of moulded plastic material.

6. An apparatus as claimed in any one of the preceding Claims, characterized in that at least one of the compression springs (41, 42) is provided with means (18) for fixing the end of the flexible insulating foil.

7. An apparatus as claimed in any one of the preceding Claims, characterized in that each of the said contact elements (5) is provided with a ball having an electrically conductive surface.

8. An apparatus as claimed in any one of the preceding Claims, characterized in that the movable part (3) and the housing (1) are provided one with pins (23) and the other with inclined slots (24) cooperating with each other to ensure a translatory movement of the movable part with respect to the housing, and in that the movable part is provided with an elastic hook (26) in order to ensure that it is taken along by the card.

9. An apparatus as claimed in Claim 8, characterized in that the elastic hook (26) and the movable part (3) are formed from one piece.

FIG.1

FIG.2

FIG.3

FIG.4

1cm

EP 0 234 654 B1

FIG.5

FIG.6

FIG.7

FIG.8

1 cm

FIG.9

8